Europäisches Patentamt

**European Patent Office**

**Office européen des brevets**

(19)

(11) Veröffentlichungsnummer: **0 018 013**
**B1**

(12) **EUROPÄISCHE PATENTSCHRIFT**

(45) Veröffentlichungstag der Patentschrift:
28.09.83

(51) Int. Cl.³: **G 01 L 1/22**

(21) Anmeldenummer: **80102140.3**

(22) Anmeldetag: **21.04.80**

(54) Dehnungsmessstreifen - Brückenschaltung.

(30) Priorität: **23.04.79 DE 2916390**

(43) Veröffentlichungstag der Anmeldung:
**29.10.80 Patentblatt 80/22**

(45) Bekanntmachung des Hinweises auf die Patenterteilung:
**28.09.83 Patentblatt 83/39**

(84) Benannte Vertragsstaaten:
**FR GB IT**

(56) Entgegenhaltungen:
**DE-A-1 573 755**
**DE-A-1 648 724**
**DE-A-2 724 817**
**FR-A-2 367 280**
**US-A-3 479 739**

(73) Patentinhaber: **SIEMENS AKTIENGESELLSCHAFT,**
**Berlin und München Wittelsbacherplatz 2,**
**D-8000 München 2 (DE)**

(72) Erfinder: **Utner, Ferdinand, Roter Brachweg 99,**
**D-8400 Regensburg (DE)**
Erfinder: **Vetter, Harald, Ing. grad., Weinberg 7,**
**D-8400 Regensburg (DE)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

# Dehnungsmeßstreifen-Brückenschaltung

Die vorliegende Erfindung betrifft eine Dehnungsmeßstreifen-Brückenschaltung zur Verwendung mit einer Meßfeder.

Eine Dehnungsmeßstreifen-Brückenschaltung ist aus der US-A-2 556 132 bekannt. Gemäß dieser Patentschrift werden von einer metallisierten Kunststoffolie Streifen abgeschnitten und auf dem zu messenden Gegenstand befestigt. Die Metallisierung wird als Widerstand in einen Brückenzweig geschaltet.

Aus der DE-A-2 724 817 ist eine Brückenschaltung der im Oberbegriff des Patentanspruches 1 genannten Art bekannt.

Ferner ist es aus der DE-A-1 573 755 bekannt, als Substrat für eine Dehnungsmeßstreifen-Anordnung eine Kunststoffolie zu verwenden.

Bei den genannten Dehnungsmeßstreifen-Anordnungen besteht keine Möglichkeit, den Temperaturkoeffizienten des Elastizitätsmoduls der Meßfeder zu kompensieren.

Aus der FR-A-2 367 280 ist es bekannt, eine Brückenschaltung zur Dehnungsmessung zu verwenden, bei der eine Grundschicht aus einem Widerstandsmaterial auf einem isolierenden Substrat angeordnet ist. Auf der Grundschicht ist an einigen Stellen eine weitere, gegebenenfalls elektrolytisch verstärkte, gut leitende Metallschicht angebracht.

Die Aufgabe, die der vorliegenden Erfindung zugrundeliegt, besteht im Aufbau einer Brückenschaltung aus zwei oder mehr Dehnungsmeßstreifen, welche einfach aufgebaut ist und eine hohe Nullpunktstabilität bei allen Betriebsbedingungen besitzt und die insbesondere eine Kompensation des Temperaturkoeffizienten des Elastizitätsmoduls der Meßfelder gestattet.

Diese Aufgabe wird durch den Gegenstand des Patentanspruches 1 gelöst.

Weiterbildungen sind Gegenstand der Unteransprüche.

Die Erfindung wird anhand von Ausführungsbeispielen näher erläutert. In der dazugehörenden Zeichnung zeigt:

Fig. 1 die Draufsicht auf eine erfindungsgemäße Vollmeßbrücke,

Fig. 2 eine Dehnungsmeßfeder, auf die eine Vollmeßbrücke gemäß Fig. 1 aufgeklebt ist,

Fig. 3 eine Vollmeßbrücke mit Abgleichflächen in schematischer Darstellung.

Unter einer Vollmeßbrücke wird eine Wheatstone'sche Brücke verstanden, wobei die als Brückenwiderstände dienenden Dehnungsmeßstreifen auf dem Meßobjekt nach Möglichkeit so angeordnet und verschaltet werden, daß jeweils zwei Widerstände einer Stauchung und zwei Widerstände einer Dehnung unterworfen werden und die Änderungen der Widerstände sich in den Abgriffpunkten für die Meßwerte addieren. Dadurch wird ein viermal so hohes Ausgangssignal erreicht wie bei der Verwendung eines einzelnen Dehnungsmeßstreifens.

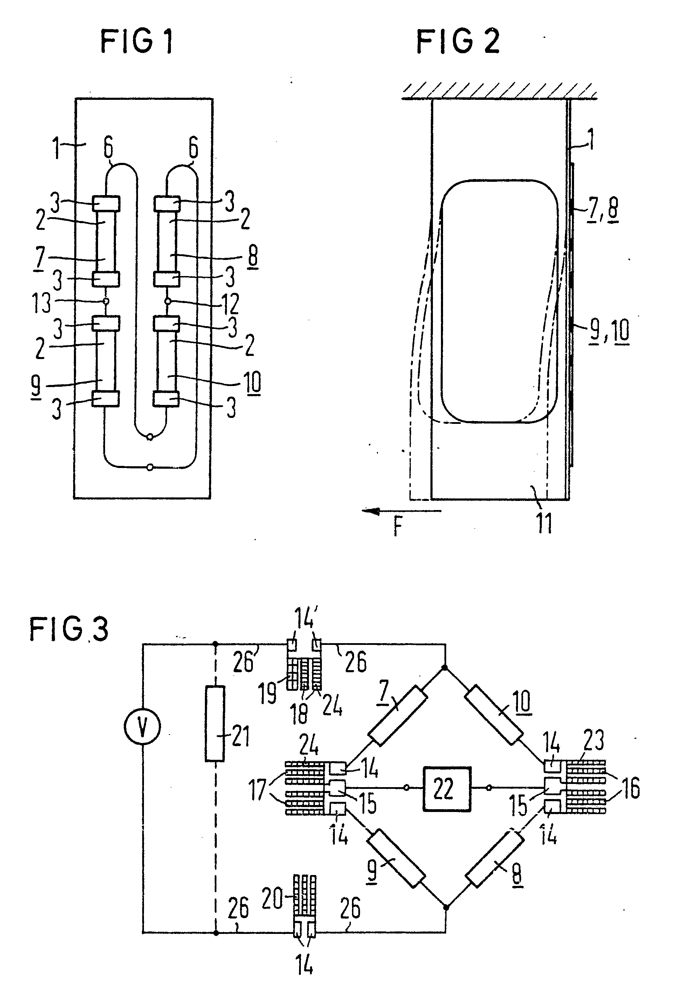

Auf eine Kunststoffolie 1 sind Widerstandsschichten 2 und Anschlußflächen 3 aufgebracht und mit der Kunststoffolie 1 stoffschlüssig verbunden. Leiterbahnen 6 verbinden und verschalten die so gebildeten Dehnungsmeßstreifen 7 bis 10. Die gesamte Brückenschaltung ist gemäß Fig. 2 auf eine Dehnungsmeßfeder 11 aufgeklebt. Die Dehnungsmeßfeder 11 ist als Parallelmeßfeder ausgebildet, die Kräfte in der Pfeilrichtung F messen soll. Auf dieser Dehnungsmeßfeder 11 werden die Dehnungsmeßstreifen 7 und 8 einer Zugspannung, die Dehnungsmeßstreifen 9 und 10 einer Stauchung ausgesetzt. Die Dehnungsmeßstreifen 7 bis 10 sind durch die Leiterbahnen 6 so zusammengeschaltet, daß an den Abgriffpunkten 12 und 13 sich die Widerstandsänderungen aller vier Dehnungsmeßstreifen 7 bis 10 addieren.

Gemäß Fig. 3 sind zu den Dehnungsmeßstreifen 7 bis 10 Abgleichwiderstände 16 bis 20 in Serie geschaltet. Die Abgleichwiderstände 16 und 17 liegen in je einem Zweig der Brückenschaltung. Je ein Abgleichwiderstand 16 bzw. 17 führt von je einer Kontaktfläche 14 zu einer Kontaktfläche 15.

An den Ausgang der Brückenschaltung ist ein Operationsverstärker 22 geschaltet, der mit der Brückenschaltung beispielsweise in Hybridtechnik verbunden ist. Dadurch ist es möglich, daß als Anzeigeinstrument für die Meßwerte ein normales Spannungsmeßgerät verwendet wird.

Die Abgleichwiderstände 18 bis 20 sind über Kontaktflächen 14' zu den Zuleitungen 26 in Serie geschaltet. Ein Widerstand 21 dient zur Anpassung des Innenwiderstandes der Schaltung. Er ist parallel zu den äußeren Anschlüssen für die Speisespannung geschaltet und mit den übrigen Widerstandsschichten 2 der Schaltung einstückig verbunden. Er weist somit dieselben Temperatureigenschaften auf wie die Dehnungsmeßstreifen 7 bis 10, so daß er keine Verfälschung der Meßwerte, z. B. bei Temperaturveränderungen, hervorruft.

Der Abgleichwiderstand 16 ist an die Widerstandsschicht der Dehnungsmeßstreifen 7 bis 10 angeformt. Er kann durch Auftrennen von Stegen 23 unter Bildung eines höheren Widerstandes zwischen den Kontaktflächen 14 und 15 zum Abgleich der Widerstandswerte der Schaltung eingesetzt werden. Der Abgleichwiderstand 17 besteht im wesentlichen aus Kupfer. Das Kupfer ist in dicker Schicht mit der darunterliegenden Widerstandsschicht stoffschlüssig verbunden. Die Widerstandsschicht trägt daher zum Leitwert dieser Abgleichflächen nicht merklich bei. Der Abgleichwiderstand 17 ermöglicht die Erhöhung des TK des Brückenzweiges mit den Dehnungsmeßstreifen 7 und 9. Damit kann der TK des durch den Operationsverstärker 22 hervorgerufenen Ausgangssignals beeinflußt werden. Die Abgleichwiderstände 18 und 20 bestehen ebenfalls im wesentlichen aus Kupfer. Sie ermöglichen den Abgleich des TK des Elastizitätsmoduls des Meßobjekts, beispielsweise der Meßfeder 11. Der Abgleichwiderstand 19 besteht wiederum aus Widerstandsmaterial und ermöglicht die Einstellung des Meßbereiches ohne nennenswerte Beeinflussung des Temperaturverhaltens der Schaltung.

Die im wesentlichen aus Kupfer bestehenden Abgleichwiderstände können nicht nur hochohmiger, sondern auch niederohmiger gestaltet werden, indem einzelne Leiteröffnungen 24 zugelötet werden.

Die vorgeschlagenen Brückenschaltungen sind in besonders kleinen Abmessungen herstellbar. Sie haben eine gute Langzeitstabilität und eine gute Nullpunktstabilität, insbesondere bei Ausbildung als Vollbrücke, sie haben gleiches Alterungsverhalten, einen streng linearen Zusammenhang zwischen Ausgangssignal und Längenänderung und einen konstanten, negativen TK des K-Faktors, welcher definitionsgemäß die Spannungsänderung je Längenänderung des Meßobjektes angibt, und eine gute Wechsellastbeständigkeit. Als Widerstandsschichten eignen sich 20 nm dicke Nickel-Chrom-Schichten, als Metallschichten für die Leiterbahnen werden 70 bis 200 nm starke Kupferschichten aufgedampft und anschließend galvanisch auf etwa 3 bis 5 μm verstärkt.

Infolge der beschriebenen Abgleichmöglichkeiten können komplizierte elektronische Hilfsschaltungen zur Kompensation von Störgrößen entfallen, was der Genauigkeit und dem Linearitätsverhalten der Anzeige zugutekommt, da die elektronischen Hilfsschaltungen grundsätzlich mit Fehlern belastet sind. Darüber hinaus ist es möglich, eine oder mehrere Vollbrücken mit den nötigen Anschlußleitungen und Abgleichflächen auf relativ großen Folienflächen zu integrieren. Dadurch kann eine gewünschte geometrische Brückensymmetrie auf den Prüfling in einem Arbeitsgang übertragen werden. Beispielsweise kann eine Dehnungsmessung in zwei aufeinander senkrechten Richtungen durch Aufkleben nur einer Folie gewährleistet sein. Dadurch ist eine genaue gegenseitige Lage von Dehnungsmeßstreifen bzw. Vollbrücken von vornherein gewährleistet.

Ein Verfahren zur Herstellung einer vorgeschlagenen Brückenschaltung besteht beispielsweise darin, daß im Bandverfahren auf eine für die Herstellung der Kontaktflächen 14, 14', 15 vorgesehene Metallfolie eine Widerstandsschicht 2 aufgedampft oder aufgesputtert wird, daß die Widerstandsschicht 2 stabilisiert wird, daß auf die Widerstandsschicht 2 eine Kunststoffolie 1 aufkaschiert wird und daß dann die Widerstandsschicht 2 und die Metallfolie durch ein selektives Ätzen gemustert werden. Beim Aufkaschieren im Bandverfahren kann eine sehr dünne Kleberschicht aufgetragen werden, welche die für die Dehnung des Meßstreifens erforderliche Kraft nicht merklich erhöht. Unter einem selektiven Ätzen wird ein Verfahren verstanden, bei dem zunächst in die Kupferschicht und in die darunterliegende Widerstandsschicht 2 ein Muster eingeätzt und dann weitere Teile der obenliegenden Kupferschicht ohne Beschädigung der darunterliegenden Widerstandsschicht abgeätzt werden.

Keinerlei Einfluß eines Klebers auf die Werte der Brückenschaltung ist bei einem Verfahren gegeben, bei dem im Bandverfahren auf eine Kunststoffolie 1 aus einem bis über 200°C temperaturstabilen Kunststoff zunächst eine Widerstandsschicht 2 aufgedampft und/oder aufgestäubt wird. Darauf wird eine für die Kontaktflächen 14, 15 vorgesehene Metallschicht aufgebracht, indem durch ein selektives Ätzen Muster in der Widerstandsschicht 2 und in der Metallschicht erzeugt werden. Schließlich wird die Widerstandsschicht 2 stabilisiert. Das Stabilisieren erfolgt beispielsweise bei Chrom-Nickel als Widerstandsschicht 2 bei Temperaturen über 200°C. Daher empfiehlt es sich, als Kunststoffolie 1 eine Polyimidfolie einzusetzen. Bei Verwendung einer Polyimidfolie als Kunststoffolie 1 ist es möglich, die auf die Kunststoffolie 1 aufgedampfte Widerstandsschicht 2 mit einem Laser abzugleichen ohne die Kunststoffolie 1 zu beschädigen, da eine Polyimidfolie bei der Belastung durch einen Laserstrahl nicht reißt und nicht versprödet. So kann beispielsweise eine Abgleichgenauigkeit von ±1‰ erreicht werden. Wegen der erreichbaren geringen Schichtdicken ist eine wesentliche Verkleinerung der Abmessungen möglich, so daß eine Vollbrückenschaltung auf der Fläche eines einzelnen Dehnungsmeßstreifens der bekannten Bauarten untergebracht werden kann.

Eine rationelle Fertigung ist dadurch ermöglicht, indem die Widerstandsschicht 2 im Bereich der Abgleichwiderstände leiterförmig strukturiert ist und ein Grobabgleich der Schaltung durch Materialabtrag an den entsprechenden Leiterstegen erfolgt und indem ein Feinabgleich durch ein Durchtrennen von Leiterstegen und/oder durch ein Zulöten von Leiteröffnungen erfolgt. Der Abgleich kann vorteilhaft durch einen Computer gesteuert werden, welcher die zu durchtrennenden Stege aus den Nullpunktabweichungen und der Geometrie der Stege berechnet.

**Patentansprüche**

1. Dehnungsmeßstreifen-Brückenschaltung zur Verwendung in Verbindung mit einer Meßfeder mit:

a) einem isolierenden Substrat (1),
b) einer auf dem Substrat angeordneten zusammenhängenden Widerstandsschicht (2), in der durch geeignete Strukturierung die folgenden Elemente ausgebildet sind:
   1. wenigstens zwei als Dehnungsmeßstreifen fungierende Meßwiderstände (7–10),

2. zwischen die Meßwiderstände geschaltete Abgleichwiderstände (16, 17) zur Einstellung des Brückengleichgewichts,

3. Kontaktflächen (14, 15) für den Eingang und Ausgang der Brückenschaltung,

c) Leitungen (26) für die Einspeisung des Brückenstroms sowie weitere Leitungen für das Brückenausgangssignal, dadurch gekennzeichnet, daß

d) das Substrat aus einer Kunststoffolie (1) besteht,

e) die Leitungen (26) für die Einspeisung des Brückenstroms durch Abschnitte der Widerstandsschicht gebildet sind, welche Abschnittte stoffschlüssig ganzflächig mit einer lötfähigen Metallschicht bedeckt sind,

f) die Kontaktflächen (14, 15) der Widerstandsschicht ebenfalls mit einer lötfähigen Metallschicht stoffschlüssig ganzflächig bedeckt sind,

g) in jeder der Leitungen (26) für die Einspeisung des Brückenstroms zwecks Kompensation des Temperaturkoeffizienten des Elastizitätsmoduls der Meßfeder jeweils ein weiterer Abgleichwiderstand (18, 19; 20) eingeschaltet ist, der jeweils einen geeignet strukturierten Abschnitt der Widerstandsschicht umfaßt, welcher Abschnitt mit den von den Speiseleitungen (26) umfaßten Abschnitten der Widerstandsschicht (2) einstückig ist.

2. Dehnungsmeßstreifen-Brückenschaltung nach Anspruch 1, dadurch gekennzeichnet, daß die Widerstandsschicht (2) im Bereich der Abgleichwiderstände (16—20) leiterförmig strukturiert ist und daß einzelne Leiterstege entweder durchtrennt oder mit benachbarten Stegen verlötet sind.

3. Dehnungsmeßstreifen-Brückenschaltung nach Anspruch 1 oder 2, dadurch gekennzeichnet, daß an den Ausgang der Brückenschaltung ein Operationsverstärker (22) angeschlossen ist.

4. Dehnungsmeßstreifen-Brückenschaltung nach einem der vorhergehenden Ansprüche, dadurch gekennzeichnet, daß zwischen die Speiseleitungen (26) ein Widerstand (21) geschaltet ist, der ebenfalls aus einem Abschnitt der Widerstandsschicht einstückig mit dieser gebildet ist.

5. Dehnungsmeßstreifen-Brückenschaltung nach einem der vorhergehenden Ansprüche, dadurch gekennzeichnet, daß der Abschnitt der Widerstandsschicht eines der beiden weiteren Abgleichwiderstände (20) ganzflächig und der Abschnitt der Widerstandsschicht des anderen der beiden weiteren Abgleichwiderstände (18, 19) teilweise mit einer Kupferschicht bedeckt ist.

6. Dehnungsmeßstreifen-Brückenschaltung nach einem der vorhergehenden Ansprüche, dadurch gekennzeichnet, daß die Widerstandsschicht (2) entweder aus Chrom-Nickel oder aus Nickel-Kupfer besteht.

7. Dehnungsmeßstreifen-Brückenschaltung nach einem der vorhergehenden Ansprüche, dadurch gekennzeichnet, daß die Kunststoffolie (1) aus Polyimid besteht.

## Claims

1. A wire strain gauge bridge circuit for use in association with a measuring spring having:

a) an insulating substrate (1),

b) a continuous resistive layer (2) which is arranged on the substrate and wherein the following elements are formed by appropriate structuring:

1. at least two measuring resistors (7—10) functioning as wire strain gauges,

2. balancing resistors (16, 17), connected between the measuring resistors, for adjusting the bridge balance,

3. contact surfaces (14, 15) for the input and output of the bridge circuit,

c) lines (26) for feeding-in the bridge current and further lines for the bridge output signal, characterised in that

d) the substrate consists of a plastics film (1),

e) the lines (26) for feeding-in the bridge current are formed by sections of the resistive layer, which are covered in a materially bonded fashion over their whole area with a solderable metal layer,

f) the contact surfaces (14, 15) of the resistive layer are similarly covered with a solderable metal layer in a materially bonded fashion over their whole area,

g) in each of the lines (26) for the feed-in of the bridge current for the purpose of compensating for the temperature coefficient of the moduls of elasticity of the measuring spring, there is connected a further balancing resistor (18, 19; 20) which comprise in each case an appropriately structured section of the resistive layer which is integral with the sections of the resistive layer (2) which are comprised in the feed lines (26).

2. A wire strain gauge bridge circuit as claimed in Claim 1, characterised in that, in the region of the balancing resistors (16—20), the resistive layer is structured to form conductors; and that individual conductor arms are either separated, or are soldered to adjoining arms.

3. A wire strain gauge bridge circuit as claimed in Claim 1 or Claim 2, characterised in that an operational amplifier (22) is connected to the output of the bridge circuit.

4. A wire strain gauge bridge circuit as claimed in one of the preceding Claims, characterised in that a resistor (21), which is also formed from a section of the resistive layer is connected between the feed lines (26) and is intergral therewith.

5. A wire strain gauge bridge circuit as claimed in one of the preceding Claims, characterised in that the section of the resistive layer one of the two further balancing resistors (20) is completely covered with a copper layer and the section of the resistive layer of the other of the two further balancing resistors (18, 19) is partially covered with a copper layer.

6. A wire strain gauge bridge circuit as claimed in one of the preceding Claims, characterised in that the resistive layer (2) consists either of chromium-nickel, or of nickel-copper.

7. A wire strain gauge bridge circuit as claimed in one of the preceding Claims, characterised in that the plastics foil (1) consists of polyimide.

## Revendications

1. Montage en pont à jauges de contrainte destiné à être utilisé en liaison avec un ressort de mesure, qui comporte:

a) un substrat isolant (1),
b) une couche résistive (2) continue, disposée sur le substrat, dans laquelle sont formés par une structuration appropriée, les éléments suivants:
    1. au moins deux résistances de mesure (7—10) faisant fonction de jauges de contrainte,
    2. des résistances d'équilibrage (16, 17), branchées entre les résistances de mesure, pour régler l'équilibre du pont,
    3. des surfaces de contact (14, 15) pour l'entrée et la sortie du montage en pont,
c) des lignes (26) pour l'amenée du courant du pont, ainsi que d'autres lignes pour le signal de sortie du pont, caractérisé par le fait que,
d) le substrat est constitué par une feuille de matière synthétique (1),
e) les lignes (26) pour l'amenée du courant du pont sont formées par des sections de la couche résistive, sections dont toute la surface est recouverte, de façon compatible du point de vue du matériau, par une couche métallique susceptible d'être brasée,
f) les surfaces de contact (14, 15) de la couche résistive sont également recouvertes sur toute leur surface, de manière compatible du point de vue du matériau, d'une couche métallique susceptible d'être brasée,
g) dans chacune des lignes (26) pour l'amenée du courant du pont, pour compenser le coefficient de température du module l'élasticité du ressort de mesure, est respectivement montée une autre résistance d'équilibrage (18, 19; 20) qui comprend respectivement une section de structure appropriée de la couche résistive, la dite section étant d'une seule pièce avec les sections de la couche résistive (2) constituant les lignes d'alimentation (26).

2. Montage en pont à jauges de contrainte suivant la revendication 1, caractérisé par le fait que la couche résistive (2) est structurée en forme d'échelle dans la région des résistances d'équilibrage (16—20), et que les barreaux individuels de l'échelle sont soit coupés soit brasés avec des barreaux voisins.

3. Montage en pont à jauges de contrainte suivant la revendication 1 ou 2, caractérisé par le fait qu'un amplificateur opérationnel (22) est raccordé à la sortie du montage en pont.

4. Montage en pont à jauges de contrainte suivant l'une des revendications précédentes, caractérisé par le fait qu'entre les lignes d'alimentation (26) est branchée une résistance (21) qui est également formée par une section de la couche résistive et est d'une seule pièce avec celle-ci.

5. Montage en pont à jauges de contrainte suivant l'une des revendications précédentes, caractérisé par le fait que la section de la couche résistive d'une des deux autres résistances d'équilibrage (20) est recouverte sur toute sa surface d'une couche de cuivre, et que la section de la couche résistive de l'autre des deux autres résistances d'équilibrage (18, 19) est recouverte partiellement d'une couche de cuivre.

6. Montage en pont à jauges de contrainte suivant l'une des revendications précédentes, caractérisé par le fait que la couche résistive (2) est constituée soit par du chrome-nickel soit par du nickel-cuivre.

7. Montage en pont à jauges de contrainte suivant l'une des revendications précédentes, caractérisé par le fait que la feuille de matière synthétique (1) est du polyimide.

# FIG 1

# FIG 2

# FIG.3